# FASCICULE DE BREVET EUROPEEN

(11) **EP 3 465 043 B1**
(45) Date de publication et mention de la délivrance du brevet: **08.07.2020**
(21) Numéro de dépôt: 17731612.2
(22) Date de dépôt: 22.05.2017
(51) Int. Cl.: F28D 1/03, F28D 9/00, F02B 29/04, F02M 35/10, F02M 35/104, F28F 21/02, F28F 21/06, F28F 9/22, F28D 21/00

(54) **RÉPARTITEUR D'AIR ET VÉHICULE COMPRENANT CE RÉPARTITEUR D'AIR**
LUFTVERTEILER UND FAHRZEUG DAMIT
AIR MANIFOLD AND VEHICLE COMPRISING SAID AIR MANIFOLD

(30) Priorité: 27.05.2016 FR 1654784
(43) Date de publication de la demande: 10.04.2019
(73) Titulaire: NOVARES FRANCE, 92140 Clamart (FR)
(72) Inventeur: ROSSIGNOL, Vincent, 69003 LYON (FR); WAYMEL, Gilles, 62410 HULLUCH (FR); DEMANGEOT, Jérôme, 62350 CALONNE SUR LA LYS (FR)
(74) Mandataire: Delorme, Nicolas
(86) Numéro de dépôt international: PCT/FR2017/051242
(87) Numéro de publication internationale: WO 2017/203143

(56) Documents cités:
- EP-A1- 2 243 938
- EP-A1- 2 508 832
- WO-A1-2014/065318
- WO-A2-2008/003074
- DE-A1-102008 057 420
- FR-A1- 2 989 768
- US-A1- 2008 173 436

## Description

La présente invention concerne un répartiteur d'air, et un véhicule comprenant ce répartiteur d'air.

Classiquement, un répartiteur d'air, aussi appelé collecteur d'admission, comprend une entrée d'air et plusieurs sorties d'air destinées à être connectées à une culasse d'un moteur pour amener à chaque cylindre du moteur l'air nécessaire à la combustion du carburant.

Il est connu de positionner un échangeur thermique à l'intérieur du répartiteur pour opérer un échange thermique entre l'air circulant à travers le répartiteur en direction du moteur et un ou des fluides circulant à travers l'échangeur thermique.

Cependant, l'échangeur thermique et le répartiteur sont des pièces indépendantes l'une de l'autre.

De plus, les échangeurs thermiques, en aluminium, sont classiquement de forme parallélépipédique. Cela n'est pas nécessairement le cas du répartiteur au sein duquel est positionné l'échangeur thermique.

Il est connu du document FR 2 989 768 A1 un échangeur de chaleur équipant un module d'admission d'air pour un moteur thermique de véhicule automobile.

Un premier inconvénient est un phénomène de by-pass : une partie de l'air circulant dans le répartiteur ne traverse pas l'échangeur thermique, mais circule au niveau du ou des jeux existants entre l'échangeur thermique et la peau du répartiteur. Il en résulte un rendement d'échange thermique moindre. De plus, la température en sortie du répartiteur n'est pas homogène.

Un autre inconvénient est que la robustesse de l'ensemble formé du répartiteur et de l'échangeur thermique est limitée. Pour y remédier, il est alors nécessaire de prévoir des pontets assurant la rigidité de cet ensemble. Toutefois, les pontets diminuent la surface d'échange thermique et conséquemment le rendement de l'échange thermique. De surcroît, les pontets sont des pièces indépendantes supplémentaires qui sont rapportées au répartiteur d'air. Cela constitue une contrainte en termes de fabrication et du fait des jeux existants, constitue une source de bruit du fait des vibrations en fonctionnement.

Aussi, la présente invention vise à pallier tout ou partie de ces inconvénients en proposant un répartiteur d'air incluant un échangeur thermique au rendement amélioré.

A cet effet, la présente invention a pour objet un répartiteur d'air ayant une enveloppe extérieure délimitant un volume intérieur, une entrée d'air débouchant dans ce volume intérieur, et plusieurs sorties d'air destinées à conduire l'air depuis le volume intérieur vers des cylindres d'un moteur, dans lequel le répartiteur d'air comprend un échangeur thermique agencé dans le volume intérieur, l'échangeur thermique comprenant une pile de plaques en matière plastique, où les plaques adjacentes de la pile de plaques sont agencées de manière à délimiter un ensemble d'espaces intermédiaires, l'ensemble d'espaces intermédiaires comprenant des espaces intermédiaires fermés qui sont connectés fluidiquement entre eux pour permettre une circulation de fluide à travers la pile de plaques, et des espaces intermédiaires ouverts qui sont configurés pour permettre un passage d'air à travers la pile de plaques depuis l'entrée d'air jusqu'aux sorties d'air du répartiteur.

Ainsi, le répartiteur selon l'invention incorpore un échangeur thermique qui occupe de manière optimisée la quasi-totalité du volume intérieur délimité par l'enveloppe extérieure du répartiteur, si bien que l'interface d'échange thermique est optimale (la surface d'échange thermique est plus grande à volume équivalent) et les fuites d'air (effet de by-pass) sont limitées par le fait que les plaques, en matière plastique, peuvent de fait épouser la forme de l'enveloppe extérieure, offrant ainsi une température plus homogène en sortie du répartiteur. De surcroît, l'échangeur thermique et le répartiteur sont d'un seul tenant, ce qui améliore la robustesse de l'ensemble répartiteur - échangeur thermique sans préjudice du rendement d'échange thermique, et ce qui contribue aussi à diminuer le bruit généré.

Selon un mode de réalisation préféré, des plaques de la pile de plaques ont une tranche solidaire de l'enveloppe extérieure du répartiteur.

Cette caractéristique a pour avantage de limiter davantage encore les effets de by-pass tout en améliorant la robustesse du répartiteur.

Selon un mode de réalisation préféré, la tranche des plaques est liée de façon continue à l'enveloppe extérieure du répartiteur.

Ainsi les effets de by-pass sont quasiment supprimés, si bien que le rendement de l'échange thermique est sensiblement amélioré.

Selon un mode de réalisation préféré, l'enveloppe extérieure du répartiteur présente une paroi latérale, et le contour des plaques est similaire au contour délimité par la paroi latérale.

Ainsi, les plaques épousent la forme du répartiteur, si bien que l'interface d'échange thermique est augmentée, ce qui améliore le rendement de l'échange thermique.

Selon un mode de réalisation préféré, le contour des plaques et de la paroi latérale s'étend au moins en partie de manière curviligne.

Cela permet de limiter les zones mortes au sein des espaces intermédiaires ouverts, c'est-à-dire des zones où transite une faible quantité d'air. Ainsi, le rendement de l'échange thermique est amélioré.

Selon un mode de réalisation préféré, l'échangeur thermique comprend une ouverture d'admission de fluide et une ouverture d'évacuation de fluide débouchant chacune dans un des espaces intermédiaires fermés pour permettre l'entrée et la sortie de fluide entre l'extérieur du répartiteur et les espaces intermédiaires fermés de la pile de plaques, et ces ouvertures d'admission et d'évacuation sont ménagées à travers l'enveloppe extérieure du répartiteur.

Ainsi, à la différence des répartiteurs de l'état de la technique où les ouvertures ménagées à travers l'enveloppe extérieure du répartiteur ne débouchent pas directement dans l'échangeur thermique mais permettent simplement le passage d'un conduit menant aux ouvertures d'admission et d'évacuation de l'échangeur thermique, ce qui nécessite de prévoir des moyens d'étanchéité entre ce conduit et l'enveloppe extérieure du répartiteur, le répartiteur selon l'invention est exempt de tels moyens d'étanchéité. Le fait que les ouvertures ménagées à travers l'enveloppe extérieure du répartiteur débouchent directement au sein de l'échangeur thermique permet d'augmenter l'interface d'échange thermique, d'éviter un effet de by-pass, et d'améliorer en conséquence le rendement de l'échange thermique.

Selon un mode de réalisation préféré, l'échangeur thermique comprend un canal d'admission et un canal d'évacuation de fluide pour permettre la circulation d'un fluide à travers les espaces intermédiaires fermés de la pile de plaques, ces canaux d'admission et d'évacuation étant agencés en regard de l'entrée d'air du répartiteur de manière à diviser le flux d'air entrant dans les espaces intermédiaires ouverts.

Cette caractéristique permet de diviser le flux d'air entrant dans le répartiteur afin de le faire circuler à travers tout l'espace intermédiaire ouvert, c'est-à-dire répartir le flux d'air pour le faire circuler sur toute la surface des plaques, qui correspond à la surface d'échange thermique, sans zone morte. Cela améliore le rendement de l'échange thermique.

Selon un mode de réalisation préféré, l'enveloppe extérieure présente une paroi qui est en regard d'une face d'une des plaques de l'échangeur thermique et qui délimite avec celle-ci un espace intermédiaire ouvert ou fermé.

Ainsi, tout le volume intérieur de l'échangeur est consacré à l'échange thermique, en vue d'améliorer le rendement de cet échange thermique.

Avantageusement, cet espace intermédiaire est un espace intermédiaire fermé.

Ainsi, il n'y a pas de flux d'air circulant entre l'enveloppe extérieure du répartiteur et l'échangeur thermique. Tout l'air passant à travers le répartiteur échange thermiquement à la fois au-dessus et au-dessous, c'est-à-dire avec un fluide circulant dans un espace intermédiaire fermé de l'échangeur thermique. Le rendement de l'échange thermique est de ce fait amélioré.

Selon un mode de réalisation préféré, des plaques de la pile de plaques s'étendent au moins en partie dans un conduit délimitant l'entrée d'air et/ou dans un ou plusieurs conduits délimitant les sorties d'air.

Cela permet d'augmenter la surface d'échange thermique, donc le rendement de l'échange thermique. De plus, une partie de l'échange thermique a lieu dans les conduits de sortie d'air, ce qui contribue à garantir une homogénéité de température en sortie du répartiteur.

Selon un mode de réalisation préféré, ces plaques présentent des languettes s'étendant depuis la tranche de ces plaques jusque dans le conduit délimitant l'entrée d'air et/ou un ou plusieurs conduits délimitant les sorties d'air, les languettes comprenant des parois ou nervures s'étendant longitudinalement selon l'axe de ce ou ces conduit(s).

Ainsi, le flux d'air est réparti de façon plus homogène à travers les espaces intermédiaires ouverts, pour un meilleur échange thermique, et redressé en sortie du répartiteur pour une meilleure stabilité et remplissage du moteur.

Selon un mode de réalisation préféré, plusieurs plaques de la pile de plaques ont une géométrie différente.

En d'autres termes, les plaques de la pile de plaques ne sont pas toutes identiques. Cette caractéristique permet avantageusement de créer un gradient thermique prédéterminé au sein de la pile de plaques, en favorisant le transfert thermique parmi un ou plusieurs groupes de plaques, c'est-à-dire à un ou des emplacements prédéterminés de la pile de plaques.

En particulier, des plaques de la pile de plaques peuvent avoir une épaisseur différente de celle d'autres plaques.

Il est aussi possible de prévoir des plaques ayant des agencements d'obstacles ou des densités surfaciques d'obstacles différents, ces obstacles étant destinés à entraver un écoulement de fluide.

Toujours dans le but de créer un gradient thermique au sein de la pile de plaques, certaines de ces plaques peuvent avoir, en plus ou alternativement à une géométrie différente, une densité différente, notamment en termes de densité de charge thermiquement conductrice différente de celle d'autres plaques.

Selon un mode de réalisation préféré, l'enveloppe extérieure du répartiteur est en matière plastique.

Cela permet d'améliorer les coûts de fabrication du répartiteur.

Selon un mode de réalisation préféré, l'enveloppe extérieure du répartiteur est dans une matière distincte de celle des plaques de la pile de plaques.

Cela permet de sélectionner une matière performante en termes d'échange thermique pour les plaques et une matière performante en termes de tenue mécanique (résistance à la pression, etc.) pour l'enveloppe extérieure du répartiteur englobant les plaques.

De préférence, les espaces intermédiaires fermés et les espaces intermédiaires ouverts sont disposés de manière alternée.

Cet agencement améliore le rendement de l'échange thermique.

Selon un autre aspect, l'invention a aussi pour objet un véhicule comprenant un répartiteur ayant les caractéristiques précitées.

Ce véhicule a l'avantage d'offrir un répartiteur d'air incluant un échangeur thermique ayant un rendement amélioré.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue en perspective d'un répartiteur selon un mode de réalisation de l'invention,
- La figure 2 est une vue en coupe partielle et en perspective d'une partie d'un répartiteur selon un mode de réalisation de l'invention,
- La figure 3 est une vue éclatée et en perspective d'un répartiteur selon un mode de réalisation de l'invention,
- La figure 4 est une vue en coupe partielle et en perspective d'un répartiteur selon un mode de réalisation de l'invention,
- La figure 5 est une vue en coupe et en perspective d'un répartiteur selon un mode de réalisation de l'invention,
- La figure 6 est une vue éclatée et en perspective d'un répartiteur selon un mode de réalisation de l'invention,
- La figure 7 est une vue éclatée et en perspective d'un répartiteur selon un mode de réalisation de l'invention.

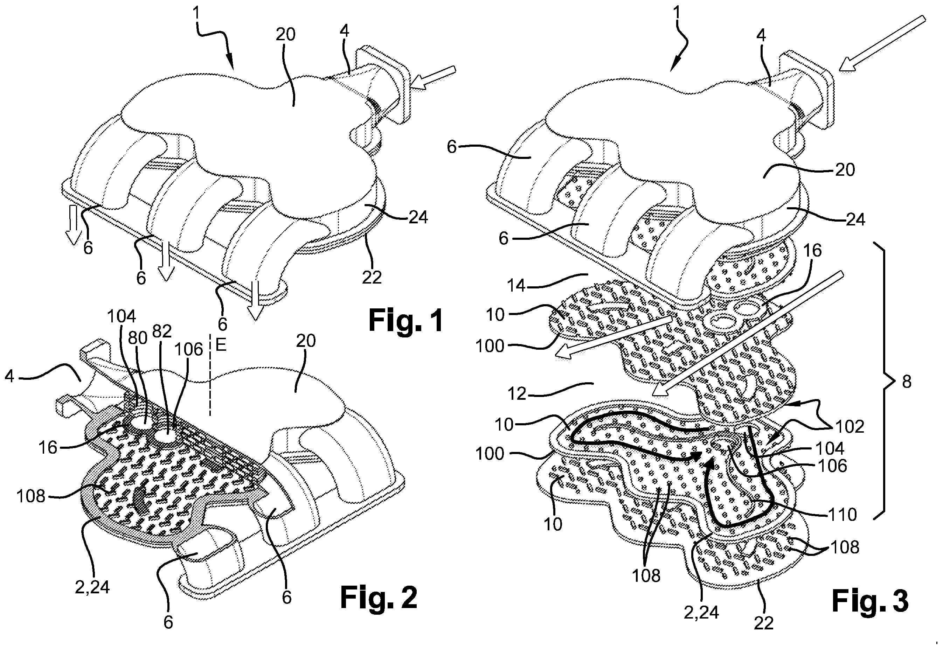

La figure 1 montre un répartiteur d'air 1 selon un mode de réalisation de l'invention. Le répartiteur d'air 1 est destiné à collecter et distribuer de l'air à chaque cylindre d'un moteur pour la combustion du carburant.

Le répartiteur 1 a une enveloppe extérieure délimitant un volume intérieur. L'enveloppe extérieure présente par exemple une paroi 20 supérieure, une paroi 22 inférieure et une paroi 24 latérale reliant la paroi 20 supérieure et la paroi 22 inférieure. Le répartiteur 1 comprend également une entrée 4 d'air débouchant dans le volume intérieur et plusieurs sorties 6 d'air destinées chacune à être connectée à un des cylindres d'un moteur pour conduire une fraction de l'air entré par l'entrée 4 jusqu'à ce cylindre.

Le répartiteur d'air 1 comprend un échangeur 8 thermique qui est agencé au moins en partie à l'intérieur du volume délimité par l'enveloppe extérieure. L'échangeur 8 est avantageusement intégralement contenu dans le répartiteur 1, plus précisément dans le volume intérieur délimité par l'enveloppe extérieure.

L'échangeur 8 thermique comprend une pile de plaques 10. Les plaques 10 sont empilées selon une direction E d'empilement prédéterminée, notamment perpendiculaire aux plaques 10, celles-ci étant par exemple planes.

Les plaques 10 adjacentes de la pile de plaques 10 sont espacées dans la direction E d'empilement de manière à délimiter, entre les plaques 10 adjacentes, un ensemble d'espaces intermédiaires destinés à une circulation de fluide entre les plaques 10, de manière à permettre un échange thermique entre ces fluides d'un espace intermédiaire à un autre à travers les plaques 10.

Les plaques 10 peuvent être de même forme et de mêmes dimensions, si bien qu'une fois empilées, les tranches des plaques 10 coïncident.

L'ensemble d'espaces intermédiaires comprend des espaces 12 intermédiaires fermés et des espaces 14 intermédiaires ouverts. Les espaces 12 intermédiaires fermés sont connectés fluidiquement entre eux pour permettre une circulation de fluide à travers ces espaces 12 intermédiaires fermés et conséquemment à travers la pile de plaques 10. Les espaces 14 intermédiaires ouverts débouchent d'un côté sur l'entrée 4 et à un autre côté sur les sorties 6 d'air pour permettre un passage d'air à travers la pile de plaques 10, depuis l'entrée 4 jusqu'aux sorties 6.

De préférence, la pile de plaques 10 comprend, dans la direction E d'empilement, une alternance d'espaces 12, 14 intermédiaires ouverts et fermés.

Les plaques 10 sont configurées pour permettre un échange thermique à travers celles-ci, c'est-à-dire d'un espace intermédiaire à un espace intermédiaire adjacent.

Les plaques 10 sont réalisées en matière plastique, notamment en matière plastique contenant une charge thermiquement conductrice, comme par exemple du polyamide 66 (PA66) incluant une charge de graphite et/ou de carbone, pour procurer une conductivité thermique à 20°C supérieure à 0, 6 W.m⁻¹.K⁻¹, de préférence égale ou supérieure à 1 W.m⁻¹.K⁻¹.

L'enveloppe extérieure du répartiteur 1, le cas échéant les conduits délimitant l'entrée 4 et les sorties 6, est aussi préférentiellement en matière plastique. Il peut s'agir de la même plastique que celle des plaques 10, ou d'une matière plastique distincte.

Des plaques 10 de la pile de plaques 10 ont avantageusement une tranche 100 solidaire de l'enveloppe extérieure du répartiteur 1, notamment la paroi 24 latérale. Plus précisément la tranche 100 des plaques 10 est en contact avec l'enveloppe extérieure, liée à celle-ci, par exemple par soudage ou collage. Afin de limiter au maximum tout effet de by-pass, la majorité des plaques 10, de préférence toutes les plaques 10 ont une tranche 100 solidaire de l'enveloppe extérieure, hormis éventuellement une ou deux plaques 10 d'extrémité de l'échangeur 8 thermique.

Pour limiter au maximum tout risque de by-pass, la tranche 100 des plaques 10 est de préférence liée sans discontinuité à l'enveloppe extérieure du répartiteur 1, sur l'intégralité de la portion de l'enveloppe extérieure avec laquelle la tranche 100 est en contact. Tout le pourtour des plaques 10 peut être ainsi lié à cette enveloppe extérieure, c'est-à-dire l'intégralité des tranches 100, hormis le cas échéant la portion de tranche 100 en regard de l'entrée 4 et des sorties 6 d'air du répartiteur 1.

En conséquence, la paroi 24 latérale fait aussi office de paroi latérale pour l'échangeur 8 thermique. Ainsi, le répartiteur 1 et l'échangeur 8 ont la même paroi latérale. Cette paroi 24 latérale commune contribue donc à délimite donc aussi, avec les faces 102 en regard des plaques 10 adjacentes, les espaces intermédiaires. L'échangeur 8 thermique épouse ainsi la forme du répartiteur 1, en l'occurrence une forme non parallélépipédique, ce qui améliore le rendement de l'échange thermique.

En particulier, on remarquera que le contour des plaques 10, notamment leur tranche 100, épouse la forme de l'enveloppe extérieure, notamment de la paroi 24 latérale, si bien que les plaques 10 ont la même forme et les mêmes dimensions que la section de paroi 24 latérale au niveau de laquelle ces plaques 10 s'étendent.

La paroi 24 latérale a de préférence un contour non rectiligne. Ainsi, le contour des plaques 10, et de la paroi 24 latérale, peut être curviligne, ce qui permet de limiter les zones à faible circulation d'air au sein des espaces 14 intermédiaires ouverts.

Comme illustré sur les figures, on remarquera notamment que la paroi latérale 24, et donc les plaques 10, s'étend de façon sinueuse au niveau des sorties 6 d'air. Ainsi, la portion de paroi 24 latérale à partir de laquelle les sorties 6 d'air s'étendent peut présenter une forme ondulée, ici en W, les sorties 6 d'air s'étendant précisément à partir des parties convexes de cette portion de paroi 24 latérale.

Par ailleurs, le répartiteur 1, notamment la paroi 24 latérale, présente une forme évasée en direction des sorties 6 d'air, c'est-à-dire s'élargit, de préférence de manière progressive, entre l'entrée 4 et les sorties 6.

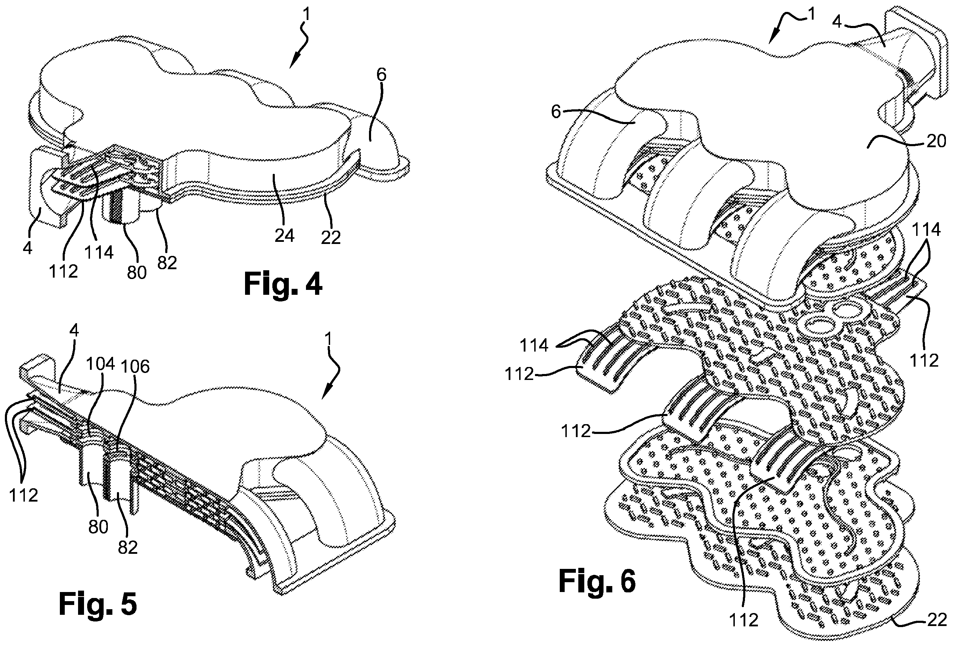

Selon une possibilité avantageuse illustrée sur les figures 4 à 6, les plaques 10 s'étendent au moins en partie à l'intérieur du conduit délimitant l'entrée 4 d'air et/ou d'un ou plusieurs des conduits délimitant les sorties 6 d'air. Ainsi, l'échangeur 8 thermique bénéficie d'une plus grande interface d'échange thermique.

En particulier, toujours selon l'exemple des figures 4 à 6, les plaques 10 présentent des languettes 112 s'étendant depuis la portion de tranche 100 en regard de l'entrée 4 et des sorties 6, jusqu'à l'intérieur de cette entrée 4 et ces sorties 6.

Les languettes 112 sont avantageusement distantes les unes des autres pour ne pas perturber l'écoulement d'air dans l'entrée 4 et les sorties 6. Le répartiteur 1 peut à cet effet comprendre des éléments d'entretoise maintenant les languettes 112 adjacentes à distance l'une de l'autre.

Alternativement ou de façon complémentaire, la tranche des languettes 112 peut être solidaire de la paroi interne des conduits délimitant l'entrée 4 et les sorties 6.

Comme visible sur les figures 4 à 6, les languettes 112 peuvent présenter des parois ou nervures 114 destinées à favoriser un écoulement laminaire du flux d'air en entrée comme en sortie du répartiteur 1. Ainsi, le flux d'air est réparti de façon plus homogène à travers les espaces intermédiaires ouverts, pour un meilleur échange thermique, et redressé en sortie du répartiteur 1 pour une meilleure stabilité et remplissage du moteur.

Les nervures 114 s'étendent longitudinalement selon l'axe du conduit d'entrée 4 ou sortie 6 correspondant, par exemple de façon sensiblement orthogonale à la portion de tranche 100. Comme représenté sur la figure 6, les nervures 114 d'une même languette 112 peuvent s'étendre de manière parallèle entre elles, notamment au niveau des sorties 6, ou bien de façon convergente en s'éloignant de la tranche 100, notamment au niveau de l'entrée 4.

En l'absence de languettes 112, on notera que les tranches 100 des plaques 10 peuvent être conformées pour limiter les turbulences et pertes de charge à l'entrée dans le répartiteur 1. Plus précisément, la portion des tranches 100 en regard de l'entrée 4 peut avoir une forme, notamment amincie, destinée à favoriser un écoulement laminaire à l'entrée du répartiteur 1.

Par ailleurs, les languettes 112 peuvent être dans le même matériau que les plaques 10 pour augmenter la surface d'échange thermique. Les languettes 112 sont avantageusement venues de matière avec les plaques 10.

Comme illustré notamment sur les figures 2, 4 et 5, l'échangeur 8 thermique comprend une ouverture 80 d'admission de fluide et une ouverture 82 d'évacuation de fluide débouchant chacune dans un des espaces 12 intermédiaires fermés pour permettre l'entrée et la sortie de fluide dans les espaces intermédiaires fermés de la pile de plaques. Ces ouvertures d'admission et d'évacuation sont ménagées directement à travers l'enveloppe extérieure même du répartiteur 1, notamment à travers la paroi 20 supérieure ou la paroi 22 inférieure, si bien que le répartiteur 1 est exempt de moyens d'étanchéité au niveau de ces ouvertures d'admission et d'évacuation.

Pour permettre la circulation d'un fluide à travers les espaces 12 intermédiaires fermés de la pile de plaques 10, l'échangeur 8 thermique comprend un canal d'admission et un canal d'évacuation de fluide.

Ces canaux d'admission et d'évacuation peuvent être formés par une pluralité d'ouvertures 104 d'entrée et d'ouvertures 106 de sortie, ces ouvertures 104, 106 étant de préférence respectivement alignées, en particulier selon la direction E d'empilement, et par exemple ménagées à travers les plaques 10, chaque plaque 10 présentant une ouverture 104 d'entrée et une ouverture 106 de sortie.

Pour permettre le passage d'un fluide d'un espace 12 intermédiaire fermé à un autre à travers un espace 14 intermédiaire ouvert, l'échangeur 8 thermique peut présenter des parois 16 périphérique contribuant à former les canaux d'admission et d'évacuation, chaque paroi 16 périphérique s'étendant tout autour d'une ouverture 104 d'entrée ou d'une ouverture 106 de sortie, ainsi que d'une face 102 à une autre des deux plaques 10 adjacents délimitant l'espace 14 intermédiaire ouvert correspondant, de manière à conduire le fluide jusqu'au prochain espace intermédiaire.

De façon avantageuse, les canaux d'admission et d'évacuation, notamment ces parois 16 périphériques, sont agencés en regard de l'entrée 4 d'air du répartiteur 1, c'est-à-dire à proximité de cette entrée 4 d'air, sur la trajectoire du flux d'air entrant dans le répartiteur 1 de manière à répartir ce flux d'air de la façon la plus homogène possible au sein des espaces 14 intermédiaires ouverts.

Les plaques 10 peuvent par ailleurs présenter des obstacles 108 en saillie depuis leur face 102 pour perturber l'écoulement de l'air circulant dans les espaces 14 intermédiaires ouverts et du ou des fluides circulant dans les espaces 12 intermédiaires fermés.

Chaque plaque 10 peut présenter une géométrie et/ou une densité différente de celle d'une ou plusieurs autres plaques 10, par exemple croissante ou décroissante dans la direction E d'empilement, si bien que la pile de plaques 10 présente avantageusement un gradient thermique prédéterminé à travers la pile de plaques 10. Plus particulièrement, les plaques 10 peuvent avoir des épaisseurs différentes les unes des autres, et/ou des arrangements d'obstacles 108 différents en termes de forme, positionnement ou concentration par unité de surface, et/ou une densité, notamment de charges thermiquement conductrices, différentes.

Au sein des espaces 12 intermédiaires fermés, les plaques 10 peuvent présenter une nervure ou paroi 110 en saillie depuis leur face 102 et s'étendant entre l'ouverture 104 d'entrée et l'ouverture 106 de sortie correspondantes afin de maximiser la distance parcourue par un fluide entre cette ouverture 104 d'entrée et cette ouverture 106 de sortie, de manière à mieux répartir le ou les fluides au sein des plaques 10 et homogénéiser ainsi l'échange thermique.

Comme visible sur les figures 3 et 6, l'enveloppe extérieure présente avantageusement une paroi, notamment la paroi 20 supérieure et/ou la paroi 22 inférieure, qui est en regard d'une face 102 d'une des plaques 10 d'extrémité de l'échangeur 8 thermique et qui délimite avec celle-ci un espace intermédiaire destiné à la circulation d'un fluide.

Cet espace intermédiaire peut être un espace 14 intermédiaire ouvert ou, de préférence, un espace 12 intermédiaire fermé.

Ainsi, tout le volume intérieur du répartiteur 1 est occupé par l'échangeur 8 thermique, ce qui améliore le rendement de l'échange thermique.

On notera que cette ou ces parois 20, 22 peuvent aussi présenter des obstacles 108 en saillie pour perturber l'écoulement d'un fluide et améliorer ainsi le rendement de l'échange thermique.

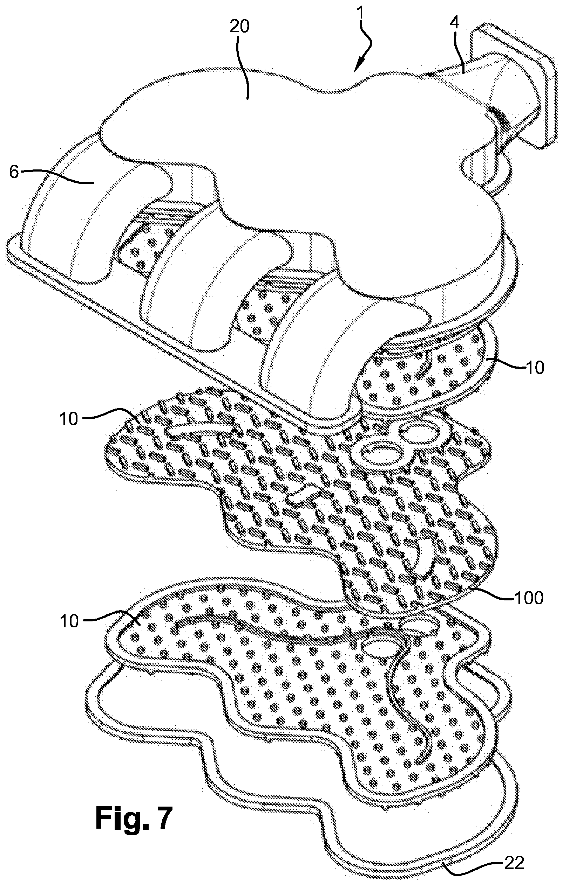

Comme illustré sur la figure 7, il est aussi possible de prévoir une paroi 22 inférieure distincte des plaques 10 de l'échangeur 8 thermique, ne délimitant ni l'un des espaces intermédiaires fermés ni l'un des espaces intermédiaires ouverts, et notamment exempte d'obstacles 108, cette paroi 22 n'appartenant pas à l'échangeur 8 thermique étant destinée à isoler thermiquement une plaque 10 d'extrémité de la pile de plaques 10 de l'extérieur du répartiteur 1, à apporter davantage de robustesse, ou à faciliter le montage.

L'invention a aussi pour objet un véhicule, notamment un véhicule automobile, comprenant le répartiteur 1 ayant tout ou partie des caractéristiques décrites ci-dessus. Les sorties 6 d'air du répartiteur peuvent être reliées à une culasse d'un moteur du véhicule de façon à alimenter les cylindres de ce moteur en air nécessaire à la combustion, tandis que l'entrée 4 d'air peut être relié à un filtre à air ou un compresseur du véhicule.

## Revendications

1. Répartiteur (1) d'air ayant une enveloppe extérieure délimitant un volume intérieur, une entrée (4) d'air débouchant dans ce volume intérieur, et plusieurs sorties (4) d'air destinées à conduire l'air depuis le volume intérieur vers des cylindres d'un moteur, dans lequel le répartiteur (1) d'air comprend un échangeur (8) thermique agencé dans le volume intérieur, l'échangeur (8) thermique comprenant une pile de plaques (10), où les plaques (10) adjacentes de la pile de plaques (10) sont agencées de manière à délimiter un ensemble d'espaces intermédiaires, l'ensemble d'espaces intermédiaires comprenant des espaces (12) intermédiaires fermés qui sont connectés fluidiquement entre eux pour permettre une circulation de fluide à travers la pile de plaques (10), et des espaces (14) intermédiaires ouverts qui sont configurés pour permettre un passage d'air à travers la pile de plaques (10) depuis l'entrée (4) d'air jusqu'aux sorties (6) d'air du répartiteur (1), **caractérisé en ce que** les plaques (10) sont en matière plastique et **en ce que** des plaques (10) de la pile de plaques (10) ont une tranche (100) solidaire de l'enveloppe extérieure du répartiteur (1).

2. Répartiteur (1) selon la revendication 1, dans lequel la tranche (100) des plaques est liée de façon continue à l'enveloppe extérieure du répartiteur (1).

3. Répartiteur (1) selon l'une des revendication 1 à 2, dans lequel l'enveloppe extérieure du répartiteur (1) présente une paroi (24) latérale, et le contour des plaques (10) est similaire au contour délimité par la paroi (24) latérale.

4. Répartiteur (1) selon la revendication 3, dans lequel le contour des plaques (10) et de la paroi (24) latérale s'étend au moins en partie de manière curviligne.

5. Répartiteur (1) selon l'une des revendications 1 à 4, dans lequel l'échangeur (8) thermique comprend une ouverture d'admission de fluide et une ouverture d'évacuation de fluide débouchant chacune dans un des espaces (12) intermédiaires fermés pour permettre l'entrée et la sortie de fluide entre l'extérieur du répartiteur (1) et les espaces (12) intermédiaires fermés de la pile de plaques (10), et ces ouvertures d'admission et d'évacuation sont ménagées à travers l'enveloppe extérieure du répartiteur (1).

6. Répartiteur (1) selon l'une des revendications 1 à 5, dans lequel l'échangeur (8) thermique comprend un canal d'admission et un canal d'évacuation de fluide pour permettre la circulation d'un fluide à travers les espaces (12) intermédiaires fermés de la pile de plaques (10), ces canaux d'admission et d'évacuation étant agencés en regard de l'entrée (4) d'air du répartiteur (1) de manière à diviser le flux d'air entrant dans les espaces (14) intermédiaires ouverts.

7. Répartiteur (1) selon l'une des revendications 1 à 6, dans lequel l'enveloppe extérieure présente une paroi (20, 22) qui est en regard d'une face (102) d'une des plaques (10) de l'échangeur (8) thermique et qui délimite avec celle-ci un espace (12, 14) intermédiaire ouvert ou fermé.

8. Répartiteur (1) selon l'une des revendications 1 à 7, dans lequel des plaques (10) de la pile de plaques (10) s'étendent au moins en partie dans un conduit délimitant l'entrée (4) d'air et/ou dans un ou plusieurs conduits délimitant les sorties (6) d'air.

9. Répartiteur (1) d'air selon la revendication 8, dans lequel ces plaques (10) présentent des languettes (112) s'étendant depuis la tranche (100) de ces plaques (10) jusque dans le conduit délimitant l'entrée (4) d'air et/ou un ou plusieurs conduits délimitant les sorties (6) d'air, les languettes (112) comprenant des parois ou nervures (114) s'étendant longitudinalement selon l'axe de ce ou ces conduit(s).

10. Répartiteur (1) selon l'une des revendications 1 à 9, dans lequel plusieurs plaques (10) de la pile de plaques (10) ont une géométrie différente.

11. Répartiteur (1) selon l'une des revendications 1 à 10, dans lequel l'enveloppe extérieure du répartiteur (1) est en matière plastique.

12. Répartiteur (1) selon l'une des revendications 1 à 11, dans lequel l'enveloppe extérieure du répartiteur (1) est dans une matière distincte de celle des plaques (10) de la pile de plaques (10).

13. Véhicule comprenant un répartiteur (1) selon l'une des revendications 1 à 12.

## Patentansprüche

1. Luftverteiler (1), aufweisend eine äußeren Hülle, ein inneres Volumen abgrenzend, ein in das innere Volumen mündende Lufteinlass (4) und mehrere Luftauslässen (4), dafür bestimmt, die Luft aus dem inneren Volumen zu Zylindern eines Motors zu leiten, in welchem der Luftverteiler (1) einen in dem inneren Volumen angeordneten Wärmetauscher (8) umfasst, wobei der Wärmetauscher (8) einen Plattenstapel (10) umfasst, wobei die aneinander angrenzenden Platten (10) des Plattenstapels (10) so angeordnet sind, dass sie eine Gesamtheit von Zwischenräumen eingrenzen, wobei die Gesamtheit der Zwischenräume geschlossene Zwischenräume (12) enthält, welche fluidisch miteinander verbunden sind, um eine Fluid-Zirkulation durch den Plattenstapel (10) zu erlauben, und offene Zwischenräume (14), welche konfiguriert sind, um einen Luftdurchzug durch den Plattenstapel (10) von dem Lufteinlass (4) bis zu den Luftauslässen (6) des Verteilers (1) zu erlauben, **dadurch gekennzeichnet, dass** die Platten (10) aus Kunststoffmaterial bestehen und dadurch, dass die Platten (10) des Plattenstapels (10) über einen mit der äußeren Hülle des Verteilers (1) solidarischen Abschnitt (100) verfügen.

2. Verteiler (1) nach Anspruch 1, in welchem der Abschnitt (100) der Platten auf kontinuierliche Weise mit der äußeren Hülle des Verteilers (1) verbunden ist.

3. Verteiler (1) nach einem der Ansprüche 1 bis 2, in welchem die äußere Hülle des Verteilers (1) eine seitliche Wand (24) aufweist, und die Kontur der Platten (10) der von der seitlichen Wand (24) eingegrenzten Kontur ähnelt.

4. Verteiler (1) nach Anspruch 3, in welchem sich die Kontur der Platten (10) und der seitlichen Wand (24) wenigstens teilweise auf krummlinige Weise erstreckt.

5. Verteiler (1) nach einem der Ansprüche 1 bis 4, in welchem der Wärmetauscher (8) eine Fluideinlassöffnung und eine Fluidevakuierungsöffnung umfasst, jeweils in einen der geschlossenen Zwischenräume (12) mündend, um den Einlass und den Auslass von Fluid zwischen dem Äußeren des Verteilers (1) und den geschlossenen Zwischenräumen (12) des Plattenstapels (10) zu erlauben, und diese Aufnahme- und Evakuierungsöffnungen durch die äußere Hülle des Verteilers (1) führen.

6. Verteiler (1) nach einem der Ansprüche 1 bis 5, in welchem der Wärmetauscher (8) einen Aufnahmekanal und einen Evakuierungskanal für Fluid umfasst, um die Zirkulation eines Fluids durch die geschlossenen Zwischenräume (12) des Plattenstapels (10) zu erlauben, wobei diese Aufnahme- und Evakuierungskanäle dem Lufteinlass (4) des Verteilers (1) gegenüberliegen, um den in die geöffneten Zwischenräume (14) eintretenden Luftstrom zu verteilen.

7. Verteiler (1) nach einem der Ansprüche 1 bis 6, in welchem die äußere Hülle eine Wand (20, 22) aufweist, welche sich gegenüber einer Fläche (102) einer der Platten (10) des Wärmetauschers (8) befindet und welche mit dieser einen geöffneten oder geschlossenen Zwischenraum (12, 14) begrenzt.

8. Verteiler (1) nach einem der Ansprüche 1 bis 7, in welchem sich Platten (10) des Plattenstapels (10) wenigstens teilweise in eine den Lufteinlass (4) begrenzende Leitung und/oder in eine oder mehrere die Luftauslässe (6) begrenzenden Leitungen erstrecken.

9. Luftverteiler (1) nach Anspruch 8, in welchem diese Platten (10) Laschen (112) aufweisen, sich von dem Abschnitt (100) dieser Platten (10) bis in die den Lufteinlass (4) begrenzende Leitung und/oder eine oder mehrere die Luftauslässe (6) begrenzende Leitungen erstreckend, wobei die Laschen (112) Wände oder Rippen (114) aufweisen, sich längsseitig gemäß der Achse dieser Leitung(en) erstreckend.

10. Verteiler (1) nach einem der Ansprüche 1 bis 9, in welchem mehrere Platten (10) des Plattenstapels (10) eine unterschiedliche Geometrie aufweisen.

11. Verteiler (1) nach einem der Ansprüche 1 bis 10, in welchem die äußere Hülle des Verteilers (1) aus Kunststoffmaterial besteht.

12. Verteiler (1) nach einem der Ansprüche 1 bis 11, in welchem die äußere Hülle des Verteilers (1) aus einem sich von dem der Platten (10) des Plattenstapels (10) unterscheidenden Material besteht.

13. Fahrzeug, umfassend einen Verteiler (1) nach einem der Ansprüche 1 bis 12.

## Claims

1. An air manifold (1) having an external shell delimiting an internal volume, an air inlet (4) opening into this internal volume, and several air outlets (4) intended to convey air from the internal volume towards cylinders of an engine, wherein the air manifold (1) comprises a heat exchanger (8) arranged within the internal volume, the heat exchanger (8) comprising a stack of plates (10), where the adjacent plates (10) of the stack of plates (10) are arranged so as to delimit a set of intermediate spaces, the set of intermediate spaces comprising closed intermediate spaces (12) which are fluidly connected to each other so as to enable a fluid circulation through the stack of plates (10), and open intermediate spaces (14) which are configured to enable a passage of air through the stack of plates (10) from the air inlet (4) up to the air outlets (6) of the manifold (1), **characterized in that** the plates (10) are made of a plastic material and **in that** plates (10) of the stack plates (10) have an edge (100) secured to the external shell of the manifold (1).

2. The manifold (1) according to claim 1, wherein the edge (100) of the plates is continuously linked to the external shell of the manifold (1).

3. The manifold (1) according to any of claims 1 to 2, wherein the external shell of the manifold (1) has a lateral wall (24), and the circumference of the plates (10) is similar to the circumference delimited by the lateral wall (24).

4. The manifold (1) according to claim 3, wherein the circumference of the plates (10) and of the lateral wall (24) extends at least partially in a curvilinear manner.

5. The manifold (1) according to any of claims 1 to 4, wherein the heat exchanger (8) comprises a fluid intake opening and a fluid discharge opening each leading into one of the closed intermediate spaces (12) so as to enable the inflow and the outflow of a fluid between the outside of the manifold (1) and the closed intermediate spaces (12) of the stack of plates (10), and these intake and discharge openings are formed through the external shell of the manifold (1).

6. The manifold (1) according to any of claims 1 to 5, wherein the heat exchanger (8) comprises a fluid intake channel and discharge channel so as to enable the circulation of a fluid through the closed intermediate spaces (12) of the stack of plates (10), these intake and discharge channels being arranged opposite the air inlet (4) of the manifold (1) so as to split the air flow entering the open intermediate spaces (14).

7. The manifold (1) according to any of claims 1 to 6, wherein the external shell has a wall (20, 22) which is opposite a face (102) of one of the plates (10) of the heat exchanger (8) and which delimits with the latter an open or closed intermediate space (12, 14).

8. The manifold (1) according to any of claims 1 to 7, wherein plates (10) of the stack of plates (10) extend at least partially into a duct delimiting the air inlet (4) and/or into one or several duct(s) delimiting the air outlets (6).

9. The manifold (1) according to claim 8, wherein these plates (10) have tabs (112) extending from the edge (100) of these plates (10) up to the duct delimiting the air inlet (4) and/or one or several duct(s) delimiting the air outlets (6), the tabs (112) comprising walls or ribs (114) extending longitudinally according to the axis of this/these duct(s).

10. The manifold (1) according to any of claims 1 to 9, wherein several plates (10) of the stack of plates (10) have a different geometry.

11. The manifold (1) according to any of claims 1 to 10, wherein the external shell of the manifold (1) is made of a plastic material.

12. The manifold (1) according to any of claims 1 to 11, wherein the external shell of the manifold (1) is made of a material other than that of the plates (10) of the stack of plates (10).

13. A vehicle comprising a manifold (1) according to any of claims 1 to 12.
